# EUROPÄISCHE PATENTSCHRIFT

(11) **EP 0 867 327 B1**
(45) Veröffentlichungstag und Bekanntmachung des Hinweises auf die Patenterteilung: **11.12.2002**
(21) Anmeldenummer: 98102992.9
(22) Anmeldetag: 20.02.1998
(51) Int. Cl.: B60K 41/08, B60K 41/28

(54) **Verfahren zur Steuerung eines zugkraftunterbrechenden automatisierten Schaltgetriebes**
Control method for an automated shift gearbox with interruption of the drive
Système de contrôle pour boîte de vitesses automatisée avec interruption de l'entraînement

(30) Priorität: 29.03.1997 DE 19713322
(43) Veröffentlichungstag der Anmeldung: 30.09.1998
(73) Patentinhaber: Volkswagen Aktiengesellschaft, 38436 Wolfsburg (DE)
(72) Erfinder: Rüdiger, Reinhard, Dipl.-Ing., 31226 Peine (DE); Altenkirch, Manfred, Dpli.-Ing., 38553 Wasbüttel (DE)

(56) Entgegenhaltungen:
- EP-A- 0 244 131
- WO-A-89/03319

## Beschreibung

Die Erfindung betrifft ein Verfahren zur Steuerung eines zugkraftunterbrechenden automatisierten Schaltgetriebes eines Kraftfahrzeuges mit einer Kupplung und einer E-Gas-Funktion für ein Antriebsaggregat. Die im Oberbegriff von Anspruch 1 genannten Maßnahmen sind hinlänglich bekannt, z.B aus WO-A-8903319.

In Kraftfahrzeugen mit automatisiertem Schaltgetriebe und E-Gas-Funktion, bei der das Leistungsstellglied der Brennkraftmaschine von einem Steuergerät aufgrund von abgespeicherten Daten und/oder von Fahrpedal-Auslenksignalen gesteuert wird, erfolgt eine Zugkraftunterbrechung, um so einen berechneten Schaltzeitpunkt verbrauchsoptimiert genau und unabhängig von der Betätigung des Gaspedals durch einen Fahrer ausführen zu können.

Aus der EP 0 361 943 A2 ist beispielsweise ein Automatikgetriebe bekannt, bei dem der Fahrer über ein starkes Drücken des Gaspedals für eine starke Beschleunigung des Kraftfahrzeuges ein ansonsten automatisch ablaufendes Hochschalten unterdrücken bzw. zeitlich verzögern kann. Somit kann der Fahrer in gewissen Grenzen den Schaltzeitpunkt des Hochschaltens durch geschicktes Betätigen des Gaspedals beeinflussen. Hierbei liegt jedoch der Schaltzeitpunkt weit außerhalb eines verbrauchsoptimierten Bereichs.

Aus der EP 0 236 322 B1 ist eine Steuereinrichtung für eine druckmittelbetätigte Schaltkupplung bekannt. Hierbei werden von der Steuereinrichtung beim Schaltvorgang einer Schubrückschaltung Gasstösse am Motor initiiert, bis die Drehzahlen vor und nach der Schaltkupplung übereinstimmen.

Aus der EP 0 390 396 B1 ist ein Verfahren zum elektronischen und automatischen Steuern eines Gangschaltungsgetriebes bekannt. Hierbei werden unnötige Schaltvorgänge dadurch vermieden, daß eine für den momentanen Fahrzustand geeignete Schaltgetriebeposition festgestellt wird, wobei ein Wechsel in eine neue Schaltgetriebeposition erst erfolgt, wenn die ständig neu festgestellte geeignete Schaltgetriebeposition in vorbestimmter Weise stabil bleibt.

Bei allen diesen Systemen ist es jedoch nachteilig, daß der eigentliche Schaltvorgang und die damit verbundene Zugkraftunterbrechung, da nicht aktiv vom Fahrer selbst gesteuert, für diesen also überraschend erfolgt. Der Fahrer empfindet dies als deutlich unangenehm, da er den Zeitpunkt des Schaltvorgangs nicht selbst bestimmen kann, sondern dieser aufgrund einer Entscheidung eines Steuergerätes unvorhergesehen erfolgt. Der Fahrer führt beispielsweise während des Schaltvorganges die gleichen Körperreaktionen wie ein Beifahrer aus. So neigt der Fahrer den gesamten Oberkörper nach vorn, wenn die zugkraftunterbrechende Schaltung für ihn unvorhergesehen kommt.

Die Durchführung der Schaltung zum berechneten Schaltzeitpunkt ist jedoch zum Erzielen von optimalen KraftstoffKraftstoff-Verbrauchswerten notwendig.

Der vorliegenden Erfindung liegt daher die Aufgabe zugrunde, ein Verfahren der obengenannten Art zur Verfügung zu stellen, wobei die obengenannten Nachteile überwunden und ein komfortableres Betriebsverhalten des Kraftfahrzeuges erzielt wird.

Diese Aufgabe wird erfindungsgemäß durch ein Verfahren der o.g. Art mit den in Anspruch 1 gekennzeichneten Merkmalen gelöst.

Dazu ist es erfindungsgemäß vorgesehen, daß zum Einleiten eines automatischen Hochschaltens des Schaltgetriebes in einen höheren Gang das Leistungsstellglied der Brennkraftmaschine derart betätigt wird, daß bei geschlossener Kupplung die Leistungsabgabe des Antriebsaggregats kurzzeitig ansteigt.

Dies hat den Vorteil, daß der Fahrer den Zeitpunkt des Schaltens auf sein eigenes Verhalten bezieht, intuitiv seine Muskeln anspannt um der erwarteten Oberkörperreaktion vorzubeugen und somit ein komfortableres Fahrgefühl erhält. Den Schaltvorgang führt der Fahrer auf sein eigenes Verhalten zurück und akzeptiert deshalb die Zugkraftunterbrechung wie bei einem herkömmlichen Schaltgetriebe und empfindet diese nicht als unangenehm.

Zweckmäßigerweise setzt die E-Gas-Funktion anschließend entsprechend zur Ausführung einer Zugkraftunterbrechung ein, wobei das Steuergerät das Leistungsstellglied der Brennkraftmaschine auf eine kurzzeitig reduzierte Leistungsabgabe einstellt.

Eine noch bessere Abstimmung auf das Verhalten und die Erwartungen eines Fahrers wird dadurch erzielt, daß das Einsetzen der E-Gas-Funktion entsprechend zur Ausführung einer Zugkraftunterbrechung erst bei Detektion einer Rücknahme einer manuellen Gasfunktion durch einen Fahrer erfolgt.

Weitere Merkmale, Vorteile und vorteilhafte Ausgestaltungen der Erfindung ergeben sich aus den abhängigen Ansprüchen, sowie aus der nachstehenden Beschreibung der Erfindung.

Zur Durchführung einer automatisierten Schaltung wird mittels einer E-Gas-Funktion bei Herausnahme eines gerade eingelegten Ganges durch automatische Gasrücknahme das Getriebe momentfrei gemacht. Für ein automatisiertes Einlegen eines kleineren Ganges muß dagegen Gas gegeben werden.

Um eine automatisierte Hochschaltung zu einem optimalen Zeitpunkt und für einen Fahrer komfortabel und nicht unangenehm durchführen zu können, wird erfindungsgemäß jedoch zunächst nicht das Gas zurückgenommen, sondern bei geschlossener Kupplung behutsam mittels der E-Gas-Funktion durch das Steuergerät und das Leistungsstellglied Gas gegeben.

Ist der Fahrer in diesem Moment bestrebt, den augenblicklichen Fahrzustand beizubehalten, muß er aktiv bzw. wird er intuitiv das Gas, d.h. eine Auslenkung des Fahrpedals, zurücknehmen. Durch einen entsprechenden automatischen E-Gas-Eingriff wird dann dieser jetzt subjektiv vom Fahrer gewünschte Momentenverringerung entsprochen und gleichzeitig wird dieser Zustand für eine zugkraftunterbrechende Schaltung ausgenutzt.

Ist dagegen der Fahrer nicht bestrebt den aktuellen Fahrzustand beizubehalten, so befindet er sich entweder in einer Beschleunigungsphase, wobei hier nicht automatisch geschaltet wird, oder er befindet sich in einer Verzögerungsphase, wobei hier problemlos und ohne komfortverlust automatisiert herunter geschaltet werden kann.

Sämtliche erforderlichen Eingriffe in das E-Gas werden dabei so leicht gestaltet, daß der Fahrer das Gefühl behält, daß er diese Vorgänge allein durch seine Aktionen hervorgerufen hat, etwa so als müsse er Gas wegen eines leichten Gefälles wegnehmen um nicht weiter zu beschleunigen.

Mit anderen Worten wird ein Fahrbahngefälle simuliert oder der Fahrer zu einem Schaltvorgang gewissermaßen gelockt.

Die automatisierten Schaltzeitpunkte sind verbrauchsoptimal, wenn der Fahrer nicht gerade den Wunsch hat, zügig oder sportlich zu fahren. Ist dies der Fall, dann können die Schaltungen nicht mehr in der oben angegeben Weise "gelockt" werden, da der Vorgang in den Beschleunigungsphasen nicht unbemerkt durchgeführt werden kann. Dies entspricht ohnehin nicht der momentanen sportlichen Erwartungshaltung des Fahrers, der kurze Zugkraftunterbrechungen zum schnellen Hochschalten erwartet. Der hierdurch auftretende Mehrverbrauch ist dem Fahrer dann auch plausibel.

## Patentansprüche

1. Verfahren zur Steuerung eines zugkraftunterbrechend zu betreibenden automatisierten Schaltgetriebes eines Kraftfahrzeuges mit einer Kupplung und einem von einem Steuergerät aufgrund von abgespeicherten Daten und/oder Fahrpedal-Auslenksignalen gesteuerten Leistungsstellglied eines Fahrzeugantriebsaggregates,
**dadurch gekennzeichnet, daß**
zum Einleiten eines automatischen Hochschaltens des Schaltgetriebes in einen höheren Gang das Leistungsstellglied derart betätigt wird, daß bei geschlossener Kupplung eine Leistungsabgabe des Antriebsaggregats kurzzeitig ansteigt.

2. Verfahren nach Anspruch 1,
**dadurch gekennzeichnet, daß**
anschließend das Leistungsstellglied zur Ausführung einer Zugkraftunterbrechung eingestellt wird.

3. Verfahren nach Anspruch 2,
**dadurch gekennzeichnet, daß**
die Betätigung des Leistungsstellgliedes zur Ausführung einer Zugkraftunterbrechung erst bei Detektion einer Rücknahme einer manuellen Gas-Funktion durch einen Fahrer erfolgt.

## Claims

1. Method for controlling an automated motor vehicle shift gearbox to be operated with traction interruption, having a clutch and a power actuator of a vehicle drive assembly, the said power actuator being controlled by a control unit on the basis of stored data and/or accelerator-pedal deflection signals, **characterized in that**, to initiate an automatic upshift of the shift gearbox into a higher gear, the power actuator is actuated in such a way that, with the clutch closed, a power output of the drive assembly briefly rises.

2. Method according to Claim 1, **characterized in that**, subsequently, the power actuator is set for the execution of a traction interruption.

3. Method according to Claim 2, **characterized in that** the actuation of the power actuator for the execution of a traction interruption takes place only when a cutback of a manual acceleration function by a driver is detected.

## Revendications

1. Système de contrôle d'une boîte de vitesses automatisée d'un véhicule automobile devant être actionnée avec interruption de l'entraînement, comprenant un embrayage et un organe de régulation de la puissance d'une unité d'entraînement du véhicule commandé par un appareil de commande sur la base de données mémorisées et/ou de signaux de déplacement de la pédale d'accélérateur,
**caractérisé en ce que**
pour amorcer un passage automatique à la vitesse supérieure de la boîte de vitesses, l'organe de régulation de la puissance est actionné de telle sorte que la puissance utile de l'unité d'entraînement augmente brièvement, l'embrayage étant fermé.

2. Système selon la revendication 1,
**caractérisé en ce que**
l'organe de régulation de la puissance est ensuite ajusté pour réaliser une interruption de l'entraînement.

3. Système selon la revendication 2,
**caractérisé en ce que**
l'actionnement de l'organe de régulation de la puissance pour réaliser une interruption de l'entraînement s'effectue seulement à la détection d'un rappel d'une fonction d'accélération manuelle par un conducteur.
